Europäisches Patentamt

European Patent Office

Office européen des brevets

(11) Numéro de publication: **0 141 734 B1**

# FASCICULE DE BREVET EUROPEEN

(45) Date de publication de fascicule du brevet:
07.08.91

(51) Int. Cl.⁵: **A44B 11/25**

(21) Numéro de dépôt: **84402151.9**

(22) Date de dépôt: **24.10.84**

(54) **Boucle de ceinture de sécurité à détection et signalisation de la position de l'organe de verrouillage.**

(30) Priorité: 24.10.83 FR 8316904

(43) Date de publication de la demande:
**15.05.85 Bulletin 85/20**

(45) Mention de la délivrance du brevet:
**07.08.91 Bulletin 91/32**

(84) Etats contractants désignés:
**DE FR GB IT SE**

(56) Documents cités:
| | |
|---|---|
| EP-A- 0 122 238 | DE-A- 2 603 435 |
| DE-A- 2 639 149 | FR-A- 2 156 400 |
| FR-A- 2 256 343 | FR-A- 2 509 969 |
| US-A- 3 871 090 | US-A- 4 163 128 |
| US-A- 4 237 586 | |

(73) Titulaire: **KLIPPAN FRANCE S.A.**
**1 rue des Acacias**
**F-75017 Paris(FR)**

(72) Inventeur: **Robben, Paul**
**Gladiolenstraat 16**
**B-3510 Kermt(BE)**

(74) Mandataire: **Kügele, Bernhard et al**
**NOVAPAT-CABINET CHEREAU 63 bis, boule-**
**vard Bessières**
**F-75017 Paris(FR)**

EP 0 141 734 B1

## Description

La présente invention concerne les boucles de ceinture de sécurité notamment pour véhicules automobiles et plus particulièrement une boucle de ceinture de sécurité du type comprenant un organe de verrouillage et un système de blocage de l'élément de verrouillage en position de verrouillage. Une telle boucle est décrite dans le brevet français 2 509 969 (demande 81/14566 déposée le 27 juillet 1981 au nom de la demanderesse).

De telles boucles ne comportent pas de moyens de détection de la position du système de blocage. Ceci présente l'inconvénient que l'utilisateur peut considérer la boucle comme correctement verrouillée alors que l'organe de blocage du verrou, qui comporte une barrette et un basculeur, ne sera pas dans sa position correcte et par conséquent, la boucle peut à tout moment faillir à sa fonction de sécurité.

La présente invention a pour objet de proposer une boucle de ceinture de sécurité permettant de pallier les inconvénients ci-dessus, à savoir de détecter et de signaler la position de l'organe de blocage.

On connaît par le brevet français 2 156 400, une boucle de ceinture de sécurité pour véhicule ayant un repère lumineux pour permettre de la trouver facilement dans l'obscurité, et un deuxième repère lumineux commandé par des contacts éclairant l'intérieur de la fente pour y engager plus facilement l'organe d'accrochage. Cette disposition ne permet pas de garantir a l'utilisateur que la boucle est correctement accrochée et qu'elle ne risque pas de faillir à sa fonction de sécurité.

Conformément à la présente invention, une boucle de ceinture de sécurité comprenant un organe d'accrochage avec une surface d'accrochage coopérant avec un élément de verrouillage, un système de blocage de l'élément de verrouillage pouvant comprendre une barrette et un organe basculeur, ledit système étant déplaçable entre une première position de blocage et une deuxième position de déblocage de l'élément de verrouillage, un ressort sollicitant le système de blocage vers sa première position de blocage quand l'organe d'accrochage est introduit dans la boucle et un bouton-poussoir pour renvoyer le système de blocage vers sa deuxième position contre la force du ressort, ladite boucle étant associée à une alarme et comportant des contacts électriques de commande de cette alarme, est caractérisée en ce que le système de blocage comporte une surface qui, quand le système de blocage est en position de verrouillage, agit directement sur les contacts de façon à commander l'alarme.

D'autres caractéristiques et avantages de la présente invention ressortiront de la description suivante, d'un mode de réalisation donné à titre illustratif mais nullement limitatif, faite en relation avec les dessins annexés sur lesquels :

la figure 1 est une vue longitudinale en coupe de la boucle de ceinture de sécurité, montée dans son boîtier;

la figure 2 est une vue schématique de l'organe de détection et de l'organe de signalisation lorsque l'élément de blocage se trouve en position dite déverrouillée;

la figure 3 est une vue schématique du circuit électrique correspondant aux positions de l'organe de détection et de l'organe de signalisation lorsque l'élément de blocage se trouve en position dite verrouillée;

la figure 4 est une vue latérale d'une lamelle de contact, permettant d'alimenter en même temps une lampe;

la figure 5 est une vue de dessous de la même lamelle;

la figure 6 est une vue latérale d'une lamelle constituant le deuxième pôle d'alimentation de la lampe;

la figure 7 est une vue latérale, de la deuxième lamelle de contact constituant un interrupteur.

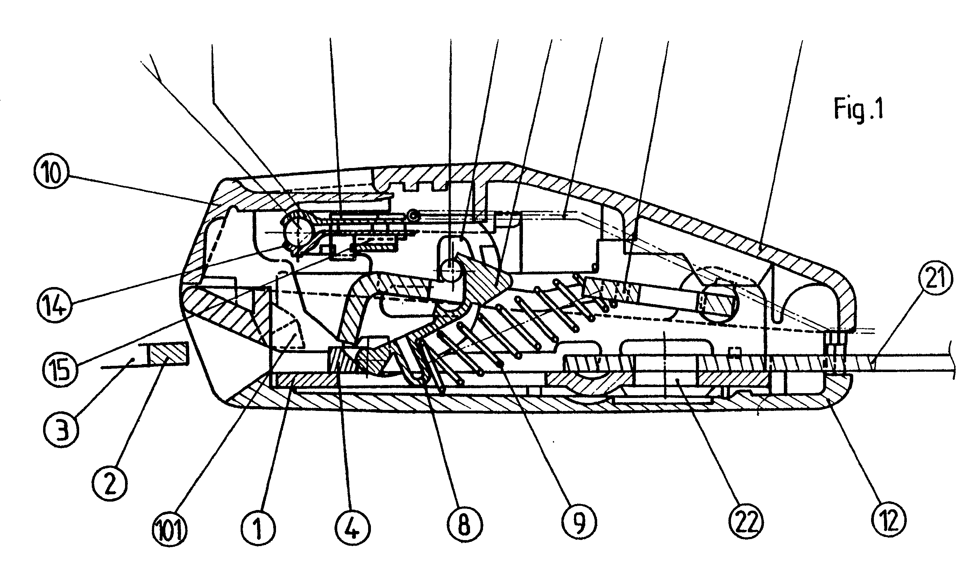

Comme représenté à la figure 1 la boucle de ceinture de sécurité comporte un organe d'accrochage 2 présentant une ouverture d'accrochage 3 qui lors de l'introduction dans la bouche d'introduction vient agir sur un éjecteur 4, lequel repousse un basculeur 8 à l'encontre de l'action d'un ressort 9. Lorsque l'élément basculeur est suffisamment reculé celui-ci exerce sur un organe de blocage 7 un effort dirigé en direction de la semelle de la platine 1 de façon à mener l'organe de verrouillage 5 en prise avec l'ouverture d'accrochage 3. A ce moment là l'organe basculeur sous l'action du ressort poussera l'organe de blocage 7 au fond de la branche longitudinale de la découpe en forme de L pratiquée dans les ailes latérales de la platine. Cette structure est bien connue notamment par la description faite dans la demande française N° 81 14 566 déposée le 27 Juillet 1981 au nom de la Demanderesse et l'on pourra s'y référer pour obtenir les détails de structure et de fonctionnement correspondant à ce type de boucle. En plus des organes bien connus, cette boucle comporte un bouton-poussoir translucide 10 un support 17 pour les lames élastiques 13, 15 d'un interrupteur et pour les lames de contact 13,14 permettant l'alimentation d'une lampe 18 . Le support 17 est monté d'une part solidaire d'un organe non mobile de la bande . Le support 12, comme sa fonction l'exige est en matériau isolant. Des fils conducteurs 16 circulent dans le boîtier 11, 12 de la boucle et sont connectés d'une part aux lames de contact 13, 14, 15 et d'autre part à une source de tension 20 alimentant le dispositif.

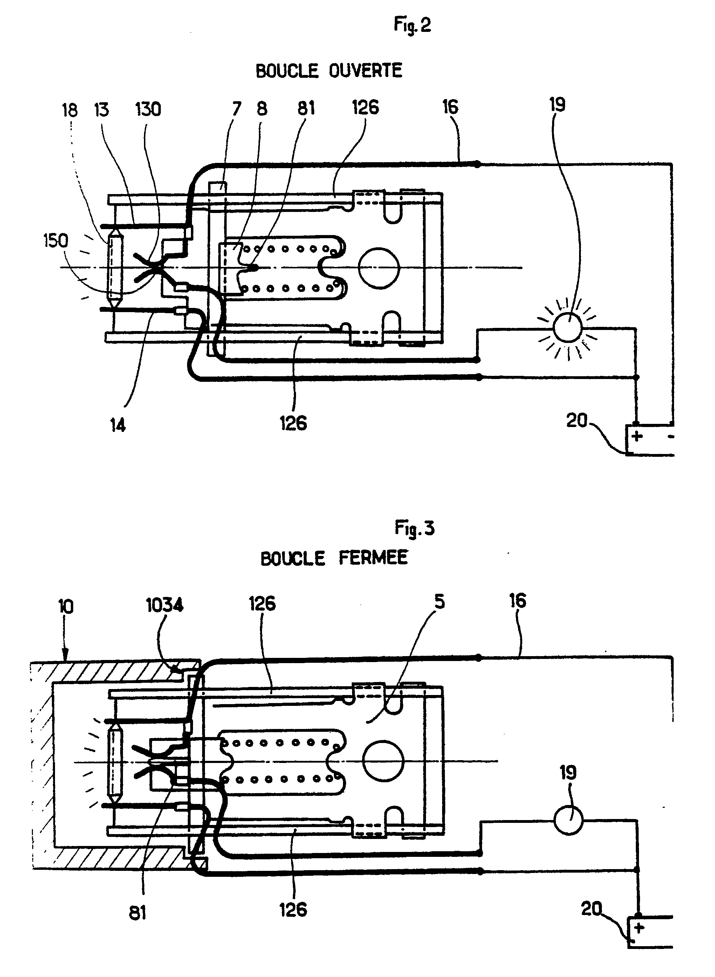

Sur la figure 2, on voit que la borne négative de la source de tension 20 est branchée par un premier fil conducteur 16 à un premier élément 13 de contact souple et d'alimentation de la lampe 18. La borne positive de la source d'alimentation 20 est branchée par un premier fil à un deuxième élément 14 de contact permettant l'alimentation de la lampe témoin 18 et par l'intermédiaire d'une deuxième lampe 19 et un troisième fil à une deuxième lame de contact souple 15. Ainsi les lames de contact souples 13,15 constituent un interrupteur. Comme on peut le voir, le circuit est donc constitué par une première lampe témoin 18 branchée aux bornes de la batterie 20 et en parallèle sur ce circuit, un circuit série constitué par un interrupteur et une deuxième lampe témoin 19. Cette lampe peut éventuellement être remplacée par tout autre système d'alarme. Comme on peut le voir sur les figures 1 et 2 l'organe basculeur 8 comporte en outre une arête dorsale 81 disposée et agencée de façon à ce qu'elle puisse venir s'interposer entre les lames de contact 13, 15 constituant l'interrupteur, lorsque l'organe basculeur est déplacé.

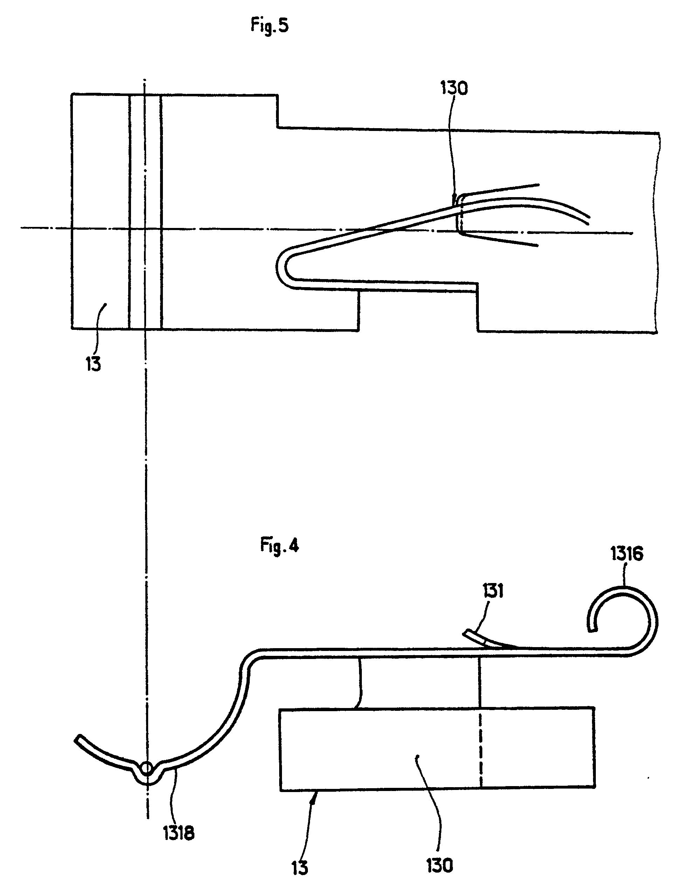

Les figures 4, 5 représentent l'élément de contact souple et de contact de la douille de l'ampoule 18. Cet élément 13 comporte une surface de contact 130 constituant la lamelle souple, une languette d'accrochage 131 du conducteur ainsi découpé dans l'élément support isolant 17 et une surface courbe 1318 permettant la réception de la douille de l'ampoule lumineuse 18. Cet élément 13 comporte également une boucle 1316 destinée à recevoir l'extrémité dénudée d'un premier fil conducteur 16.

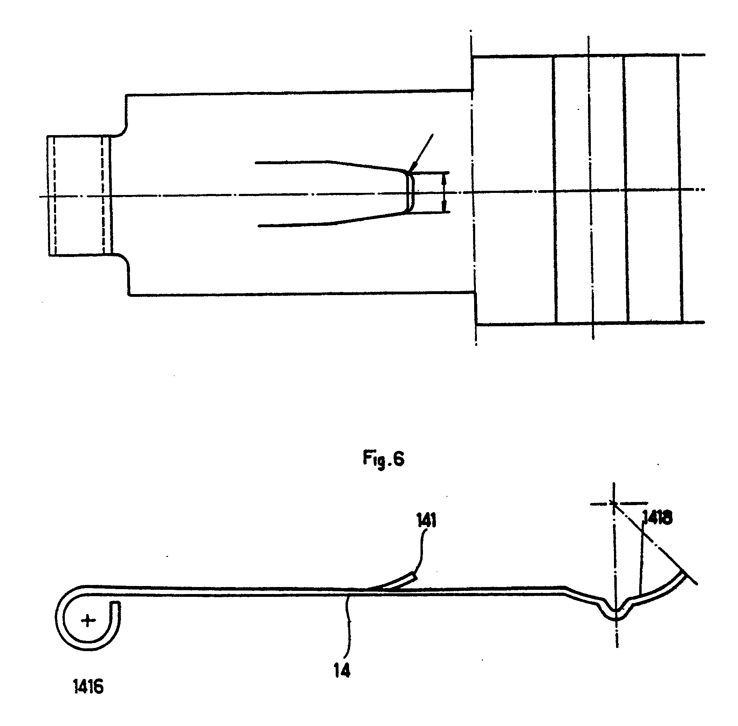

La figure 6 représente la deuxième lame 14 assurant le contact avec la douille de l'ampoule lumineuse 18. Cette lame 14 comporte une boucle 1416 destinée à recevoir la partie dénudée d'un deuxième fil conducteur 16, une languette d'accrochage 141 destinée à immobiliser cette lame conductrice dans le support isolant 17 et enfin une surface 1418 de forme adaptée à la forme de la douille de l'ampoule 18.

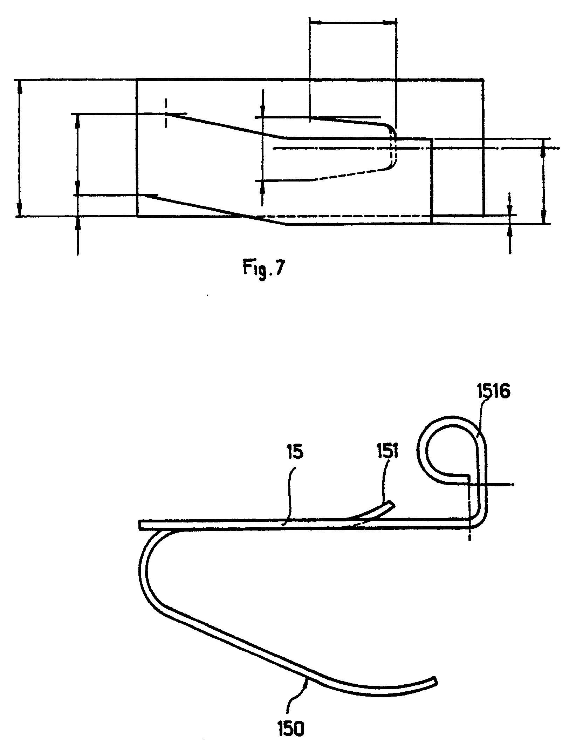

La figure 7 représente la forme de la deuxième lame souple constituant avec la première lame souple 130 l'interrupteur du dispositif. Cette deuxième lame souple 15 en matériau conducteur comporte une boucle 1516 destinée à recevoir la portion dénudée d'un fil conducteur 16. Cette lame 15 comporte également une languette 151 d'immobilisation de l'ensemble dans l'élément support d'isolant 12 et une lame souple 150 constituant le deuxième contact de l'interrupteur.

Le fonctionnement du dispositif va maintenant être expliqué à la lumière des figures 1, 2 et 3.

Lorsque l'élément basculeur a suffisamment reculé pour appuyer sur la barrette de blocage 7, entraînant la pénétration de l'organe de verrouillage 5 dans l'ouverture d'accrochage 3 et l'avancée de la barrette 7 au fond de la rainure longitudinale de la lumière 26 en forme de L, à ce moment là l'arête dorsale 81 de cet élément basculeur peut s'interposer entre les lamelles de contact 130, 150 comme représenté à la figure 3. Cette position correspond à la position dite de verrouillage, et dans cette position on constate que la lampe 19 n'est plus alimentée alors que la lampe 18 reste alimentée. Par contre, lorsque la barrette ou l'organe de blocage 7 est dans la position correspondante à celle de la figure 1 à ce moment là l'arête dorsale 81 se trouve dans la position représentée à la figure 2 et ne peut s'engager entre les lamelles de contact souple 130,150 de façon à interrompre le circuit d'alimentation de la lampe témoin 19. Ainsi, on a constitué un dispositif permettant la détection et la signalisation de la position de l'organe de verrouillage en configuration verrouillée, tout en réalisant un éclairage permanent du bouton poussoir.

Il est bien évident que le mode de réalisation décrit n'est simplement qu'un exemple et que toute modification à la portée de l'homme de métier fait également partie de l'esprit de l'invention.

Ainsi le dispositif au lieu de comporter deux lampes, une 18 allumée en permanence et montée dans le bouton-poussoir 10 et la deuxième 19 s'allumant suivant la position détectée, on pourrait concevoir un autre dispositif comprenant une seule lampe montée dans le bouton-poussoir et ne s'allumant que lorsque la boucle de sécurité se trouverait dans la configuration dite déverrouillage.

D'autre part, comme dans la demande déposée sous le N° 81 14 566, le bouton-poussoir comporte également une surface inclinée 101 (cf figure 1) qui coopère avec l'élément de verrouillage 5 pour l'aider à s'extraire de l'ouverture d'accrochage 3. Le bouton-poussoir 10 comporte également des surfaces 1034 ménagées dans les parois latérales du bouton-poussoir 10 qui coulisse le long des ailes 126 de la platine. Ces surfaces 1034 ont pour but de coopérer avec la barrette de blocage 7 de façon à la faire se déplacer dans la lumière 26 en forme de L découpée dans les ailes 126 de la platine 1. Enfin, à part les modifications apportées sur l'élément basculeur 8 l'élément support isolant 17 et les pièces conductrices de contact 13, 14 et 15 et la lampe 18 ainsi que les circuits électriques, la boucle de ceinture de sécurité est en tout point identique à celle décrite dans la demande citée ci-dessus et l'on pourra se référer à cette demande pour extraire des renseignements complémentaires sur les formes et le fonctionnement des différents organes.

Quoique la présente invention ait été décrite en relation avec des modes de réalisation particuliers, elle ne s'en trouve pas limitée, mais est au contraire susceptible de modifications et de variantes qui apparaîtront à l'homme de l'art.

## Revendications

1. Boucle de ceinture de sécurité comprenant un organe d'accrochage (2) avec une surface d'accrochage (3), coopérant avec un élément de verrouillage (5), un système de blocage de l'élément de verrouillage, pouvant comprendre une barrette (7) et un organe basculeur (8) ledit système étant déplaçable entre une première position de blocage et une deuxième position de déblocage de l'élément de verrouillage, un ressort (9) sollicitant le système de blocage vers sa première position de blocage quand l'organe d'accrochage (2) est introduit dans la boucle, et un bouton-poussoir (10) pour renvoyer le système de blocage vers sa deuxième position contre la force du ressort (9), ladite boucle étant associée à une alarme et comportant des contacts électriques de commande de cette alarme, caractérisée en ce que le système de blocage comporte une barrette (7) et un basculeur (8) munis d'une arête dorsale (81) qui, quand le système de blocage est en position de verrouillage, agit sur les contacts (130, 150) de façon à commander l'alarme.

2. Boucle de ceinture de sécurité selon la revendication 1, caractérisée en ce que l'alarme est constituée par une ampoule lumineuse (19) portée dans un logement prévu dans le bouton-poussoir (10) et solidaire de celui-ci.

3. Boucle de ceinture de sécurité selon l'une des revendications 1 ou 2, caractérisée en ce que l'alarme est une ampoule lumineuse (19) portée par un organe indépendant de la boucle.

4. Boucle selon l'une des revendications 2 ou 3, caractérisée en ce qu'une deuxième ampoule lumineuse (18) est montée sur un organe support (17) de la boucle et est connectée en dérivation sur le circuit constitué par l'interrupteur (13, 15) et la première ampoule (19).

5. Boucle selon la revendication 4, caractérisée en ce que l'organe support (17) est solidaire de la platine (1) ou d'un autre organe fixe de la boucle.

6. Boucle de ceinture de sécurité selon l'une des revendications précédentes, caractérisée en ce que l'organe d'accrochage (2, 3) agit par l'intermédiaire d'un organe éjecteur (4) sur l'organe basculeur (8).

7. Boucle de ceinture de sécurité selon l'une des revendications 4 à 6, caractérisée en ce que le bouton-poussoir (10) qui entraîne l'organe support (17) agit également par l'intermédiaire d'une surface inclinée (101) sur l'élément de verrouillage (5) et sur la barrette (7) par l'intermédiaire de surfaces (1034) ménagées dans les flancs latéraux du bouton-poussoir (10), qui permettent le guidage de celui-ci par rapport aux ailes de la platine (126).

## Claims

1. A safety belt buckle including a catching element (2) with a catching surface (3) cooperating with a locking element (5), a system for blocking said locking element, possibly comprising a small bar (7) and a tipper element (8), said system being movable between a first blocking position and a second position for unblocking said locking element, a spring (9) adapted to bias said blocking system towards its first blocking position when said catching element (2) is introduced into the buckle, and a push-button (10) to return said blocking system towards its second position against the spring (9) force, said buckle being associated with an alarm and including electric contacts for controlling said alarm, characterized in that said blocking system includes a small bar (7) and a tipper (8) provided with a dorsal ridge (81) which, when the blocking system is in a locking position, acts upon said contacts (130, 150) in order to control said alarm.

2. The safety belt buckle of claim 1, charaterized in that said alarm includes a light bulb (19) carried in a housing in said push-button (10) and integral with it.

3. The safety belt buckle of claim 1 or 2, charaterized in that said alarm includes a light bulb (19) carried on an element independently from said buckle.

4. The safety belt buckle of claim 2 or 3, characterized in that a second light bulb (18) is provided on a support element (17) of said buckle and is shunt connected to the circuit including the swith (13, 15) and the first bulb (19).

5. The buckle of claim 4, characterized in that said support element (17) is integral with the platen (1) or an another fixed element of said buckle.

6. The safety belt buckle of any preceding claim, characterized in that the catching element (2, 3) acts upon said tipper element (8) through an ejector mechanism (4).

7. The safety belt buckle of claims 4-6, characterized in that said push-button (10) which drives the support element (17) also acts upon said locking element (5) through a slanted surface (101) and upon said small bar (7) through surfaces (1034) formed in the side flanks of the push-button (10), allowing the latter to be guided by flanges of said platen (126).

**Patentansprüche**

1. Sicherheitsgurtschloß, bestehend aus einem Halteelement (2) mit einer Haltefläche (3), das mit einem Verriegelungselement (5) zusammenwirkt, einem System zur Arretierung des Verriegelungselements, das einen Bügel (7) und ein Kippelement (8) aufweisen kann, wobei das System zwischen einer ersten Stellung zum Blockieren und einer zweiten Stellung zum Freigeben des Riegelungselements verstellbar ist, einer Feder (9), die das Arretierungssystem in seine erste Stellung zum Arretieren vorspannt, wenn das Halteelement (2) in das Schloß eingeführt wird, und einem Druckknopf (10), um das Arretiersystem in seine zweite Stellung entgegen der Kraft der Feder (9) zurückzuführen, wobei dem Schloß eine Alarmeinrichtung zugeordnet ist und elektrische Alarmsteuerkontakte aufweist, **dadurch gekennzeichnet, daß** das Arretiersystem einen Bügel (7) und ein Kippelement (8) aufweist, die mit einem hinteren Anschlag (71) versehen sind, der, wenn das Arretiersystem in der Verriegelungsstellung ist, auf die Kontakte (130, 150) wirkt, um den Alarm zu steuern.

2. Sicherheitsgurtschloß nach Anspruch 1, **dadurch gekennzeichnet, daß** die Alarmeinrichtung aus einer Signallampe (19) besteht, die in einer Aufnahme sitzt, die in dem Druckknopf (10) vorgesehen und mit diesem verbunden ist.

3. Sicherheitsgurtschloß nach Anspruch 1 oder 2, **dadurch gekennzeichnet, daß** die Alarmeinrichtung aus einer Signallampe (19) besteht, die an einem vom Schloß unabhängigen Element sitzt.

4. Sicherheitsgurtschloß nach einem der Ansprüche 2 oder 3, **dadurch gekennzeichnet, daß** eine zweite Signallampe (18) an einem Tragelement (17) der Schnalle angeordnet und an den Kreis angeschlossen ist, der aus dem Unterbrecher (13, 15) und der ersten Signallampe (19) besteht.

5. Sicherheitsgurtschloß nach Anspruch 4, **dadurch gekennzeichnet, daß** das Tragelement (17) mit der Grundplatte (1) oder einem anderen festen Element des Schlosses verbunden ist.

6. Sicherheitsgurtschloß nach einem der vorhergehenden Ansprüche, **dadurch gekennzeichnet, daß** das Halteelement (2, 3) mittels eines Auswerfers (4) auf das Kippelement (8) wirkt.

7. Sicherheitsgurtschloß nach einem der Ansprüche 4 bis 6, **dadurch gekennzeichnet, daß** der Druckknopf (10), der das Tragelement antreibt, auch mittels einer geneigten Fläche (101) auf das Verriegelungselement (5) und den Bügel (7) mittels Flächen (1034), die in den Seitenwänden des Druckknopfs (10) ausgebildet sind, die dessen Führung bezüglich der Schenkel der Platine (126) ermöglicht, wirkt.

Fig.1

Fig. 2

BOUCLE OUVERTE

Fig. 3

BOUCLE FERMEE

Fig. 5

130

13

Fig. 4

1316

131

1318

13

130

**Fig.6**

141

1416

14

1418

Fig.7

15    151    1516

150